# EUROPÄISCHE PATENTSCHRIFT

(11) **EP 0 537 317 B1**
(45) Veröffentlichungstag und Bekanntmachung des Hinweises auf die Patenterteilung: **03.09.1997**
(21) Anmeldenummer: 92909447.2
(22) Anmeldetag: 25.04.1992
(51) Int. Cl.: C08L 3/16, C08B 33/02

(54) **NASSFESTE STÄRKEWERKSTOFFE FÜR DIE HERSTELLUNG VON GIESSFOLIEN UND THERMOPLASTISCHEN MATERIALIEN**
MOISTURE-PROOF STARCH MATERIAL FOR MAKING CAST FILMS AND THERMOPLASTIC MATERIALS
PRODUITS A BASE D'AMIDON RESISTANT A L'HUMIDITE POUR LA FABRICATION DE FEUILLES COULEES ET DE MATERIAUX THERMOPLASTIQUES

(30) Priorität: 30.04.1991 DE 4114185
(43) Veröffentlichungstag der Anmeldung: 21.04.1993
(73) Patentinhaber: EMS-INVENTA AG, 8001 Zürich (CH)
(72) Erfinder: FRISCHE, Rainer, D-6000 Frankfurt am Main (DE); GROSS-LANNERT, Renate, D-6057 Dietzenbach (DE); WOLLMANN, Klaus, D-6251 Eschenhofen (DE); SCHMID, Eduard, CH-7402 Bonaduz (CH); BÜHLER, Fritz, CH-7430 Thusis (CH); BEST, Bernd, D-6082 Mörfelden (DE)
(74) Vertreter: Müller-Boré & Partner Patentanwälte
(86) Internationale Anmeldenummer: EP9200914
(87) Internationale Veröffentlichungsnummer: WO9219675

(56) Entgegenhaltungen:
- EP-A- 0 376 201
- EP-A- 0 394 803
- WO-A-91/00313
- DE-A- 4 013 344
- GB-A- 964 799

## Beschreibung

Die Erfindung betrifft den in den Patentansprüchen angegebenen Gegenstand.

Die Erfindung betrifft insbesondere haßfeste Stärkewerkstoffe, die thermoplastisch sind und zu umweltsicheren Produkten, insbesondere Formteilen und thermoplastisch hergestellten Folien sowie Gießfolien verarbeitbar sind.

Stärkeester, insbesondere Acetate, sind schon seit langem bekannt. Es werden hochsubstituierte Stärkeacetate mit einem Substitutionsgrad (DS) von 2-3 und niedrig substituierte Stärkeacetate mit einem DS bis max 1 unterschieden. Während hochsubstituierte Stärkeacetate bisher keine technische Bedeutung erlangt haben, sind niedrig substituierte Stärkeacetate etablierte kommerzielle Produkte.

Bekannte Acetate mit hohem Substitutionsgrad (DS 2,5-3) sind Cellulose- und Amylosetriacetat. In der Literatur werden die Eigenschaften von Filmen aus Amylosetriacetat ähnlich zu denen aus Cellulosetriacetat beschrieben. Die Filme wurden aus Chloroform hergestellt.

Ebenso allgemein bekannt und in zahlreichen Zitaten beschrieben, ist die Herstellung von Stärkeacetaten nach in der chemischen Industrie üblichen Methoden und Verfahren wie z.B. unter Einsatz von Essigsäureanhydrid, Essigsäureanhydrid-Pyridin, Essigsäureanhydrid-Eisessig-Gemische, Keten, Vinylacetat und Essigsäure, wobei als Stärke überwiegend Kartoffelstärke und Maisstärke verwendet werden.

Um zu hoch substitutierten Derivaten zu kommen, mußten relativ lange Reaktionszeiten und drastische Reaktionsbedingungen in Kauf genommen werden.

Besonders nachteilig bei diesen Verfahren ist der starke Abbau der Stärkemoleküle zu relativ kurzen Ketten, die nicht mehr die stärketypischen filmbildenden Eigenschaften besitzen.

Über die Herstellung von High-Amylose-Stärkeacetat mit hohem Substitutionsgrad ist nur wenig beschrieben. Eine Vorschrift von Mark und Mehltretter findet sich in der US 3,795,670 und in der entsprechenden Veröffentlichung "Facile Preparation of Starch Triacetates" in der Zeitschrift Stärke, Heft 3, Seiten 73-100 (1972). Als Stärke wurde eine käufliche High-Amylose-Maisstärke von National Starch mit einem Amylosegehalt von ca 70 % eingesetzt. Durch gezielte Auswahl des Katalysators und Variation dessen Menge wurde bei einer Reaktionszeit von etwa 5 Stunden die angestrebte vollständige Acetylisierung unter Vermeidung der obigen üblichen Verfahren und dabei eingesetzten Stoffkomponenten erzielt. Das nach den 5 Stunden gewonnene Acetat mit einem Substitutionsgrad von 3 ließ sich mit Dichlormethanlösung zu transparenten flexiblen Folien gießen. Obwohl keine anderen High-Amylose-Stärken eingesetzt wurden, wurde angenommen, daß das angegebene Verfahren allgemein für High-Amylose-Stärken mit gleichem Verlauf und Ergebnissen anwendbar wäre und die gewonnenen Stärketriacetate im übrigen auch zu Fasern umsetzbar wären.

Die mit diesem Verfahren gewonnenen Triacetate sowie daraus hergestellte Folien sind jedoch erwartungsgemäß nicht in akzeptablen Zeiträumen vollständig biologisch abbaubar bzw. kompostierbar. Vorteile gegenüber Celluloseacetaten sind in Bezug auf diesen Punkt nicht beobachtet worden.

EP-A-376 201 beschreibt biologisch abbaubare, modifizierte Hochamylosestärken und ein Verfahren zur Herstellung von Schäumen und Schaumsträngen zum einsatz als Verpackungschips und Verpackungsschutzbehälter durch Extrusion. Als besonders zweckmäßig erwiesen sich hierfür mit Ethylenoxid oder Propylenoxid niedrig veretherte Hochamylosestärken mit einem Substitutionsgrad von höchstens 0,2, wohingegen der Substitutionsgrad der vorliegenden naßfesten Stärkeacylverbindungen eine Zehnerpotenz größer ist.

DE-A- 40 13 344 beschreibt die Herstellung von Spezialamylosen und ihre Verwendung zur Herstellung biologisch abbaubarer Kunststoffe. Bei den eingesetzten Spezialamylosen handelt es sich um Hydroxyalkylderivate der Amylose mit einem Substitutionsgrad von 0,02 bis 0,15.

Der Anmeldung liegt die Aufgabe zugrunde, Stärkewerkstoffe anzugeben, die sich durch einen hohen Gebrauchswert auszeichnen, sich nicht nur zu Gießfolien, sondern auch thermoplastisch zu beliebigen Formteilen und Folien verarbeiten lassen, die umweltsicher sind und vollständig zu in der Natur ohnehin vorkommende Stoffe unter Umweltbedingungen abbaubar sind. In die Umwelt eingebracht, geht von diesen Werkstoffen keine nachhaltige Umweltgefährdung aus.

Diese Aufgabe wird gelöst durch einen naßfesten thermoplastischen zu umweltsicheren thermoplastisch hergestellten Produkten und Gießfolien verarbeitbarer Stärkewerkstoff, dadurch gekennzeichnet, daß er aus
(a) mindestens einer in Wasser schwerlöslichen Stärkeacylverbindung mit einem Substitutionsgrad von mindestens 1,86, herstellbar durch die Reaktion von
   (i) Hoch-Amylose-Stärke mit einem Amylosegehalt > 70% Amylose,
   mit
   (ii) einer oder mehreren Acylkomponenten ausgewählt aus der Gruppe Essigsäure, Essigsäureanhydrid und C₆-C₂₄ Fettsäuren in Form der freien Säure oder Fettsäurechlorid sowie gemischten Anhydriden davon,
(b) mindestens einem biologisch abbaubaren Weichmacher ausgewählt aus der Gruppe Zitronensäureethylester, Glycerinacetat, Phosphorsäureester und Milchsäureethylester,
   und
(c) gebebenenfalls Adipinsäredimethylester oder Benzylbutylphthalat
besteht.

Verfahren zur Herstellung des Stärkewerkstoffs und dessen Verwendung sind in den Ansprüchen 7 und 11 bzw. 12 gekennzeichnet.

In den Unteransprüchen sind vorteilhafte Ausführungsformen der Erfindung enthalten.

Die Erfinder ermittelten, daß durch Einsatz von Weichmachern und speziellen Maisstärken sowie inzwischen gezüchteten amylosereichen Mais- und Erbsenstärken, obwohl letztere sich in ihrem Amylosegehalt nicht von dem der im obigen Verfahren, gemäß US 3,795,670 eingesetzten Maisstärkesorte unterscheiden, von der bisherigen Forderung einer vollständigen Acetatisierung und damit eines notwendigen Substitutionsgrades des Stärkeacetats von 3 abgegangen werden konnte, um transparente und flexible Gießfolien erzeugen zu können.

Auch ist erstaunlich, daß bei Verwendung derartiger Stärken, vorzugsweise bestehend aus 70 % Amylose und 30 % Amylopektin, überhaupt einheitliche thermoplastisch verarbeitbare Materialien wie aus den entsprechenden Amyloseprodukten direkt gewonnen werden können.

Bei der direkten Acetatisierung von High-Amylose-Maisstärke, d.h. ohne nachträgliche DS-Einstellung, wie es bei Celluloseacetaten notwendig ist, können Produkte erzeugt werden, die nicht nur in organischen Lösungsmitteln klare Lösungen ergeben, aus denen klare, transparente Folien herstellbar sind, sondern auch bei der thermoplastischen Verarbeitung klare Materialien liefern.

Bei der Bestimmung des Substitutionsgrades der aus den eingesetzten Maisstärken gewonnenen Acetate mit diesen Eigenschaften wurden Werte um 2,5 und hinunter bis zu 2,2 und damit deutlich unter einem DS-Wert von 3 ermittelt. Dies ist um so überraschender, weil diese Werte deutlich niedriger liegen als die der reinen Amylose- und Celluloseacetaten, wobei von diesen Werten nach dem Stand des Wissens angenommen wurde, daß sie für die Folienherstellung und Qualität zwingend notwendig sind. Der Fachmann ging auch entsprechend dem zitierten Verfahren bisher davon aus, daß durch direkte Acetatisierung ohne Rückverseifung gewonnene Acetatderivate mit einem Substitutionsgrad kleiner 3 keine klaren Lösungen bilden, wie dies auch für viele Celluloseacetate der Fall ist. Bei Einsatz der erfindungsgemäßen Weichmacher ist es möglich, bei derartig niedrigen DS-Werten aus dem Werkstoff Maisstärkeacetat plus Weichmacher direkt die gewünschten Produkte herzustellen.

Erfindungsgemäß wurde überraschenderweise und entgegen den Annahmen im zitierten Verfahren auch gefunden, daß bei Verwendung einer anderen High-Amylosestärke wie z.B. einer High-Amylose-Erbsenstärke unter Anwendung gleicher Reaktionsbedingungen ein High-Amylose-Erbsenstärke-Acetat mit deutlich anderen Eigenschaften als der der Maisstärke erhalten wird.

Dabei erwies sich die High-Amylose-Erbsenstärke als wesentlich günstigerer Rohstoff. Bereits nach einer Reaktionszeit von nur 2 Stunden gelangt man zu Substitutionsgraden um 2,5; die zusammen mit der Eigenschaft der Weichmacher einen Werkstoff der angestrebten Art ergeben. Der Substitutionsgrad kann auf diese Weise sogar unter 2,5 reduziert werden, ohne daß Eigenschaftsverluste bei den resultierenden Werkstoffen eintreten. Durch längere Reaktionszeiten ist es möglich, den DS-Wert bis auf 3 zu steigern und entsprechend den Weichmacherzusatz zu verringern, wenn dies wegen bestimmter Anforderungen an die Endprodukte erwünscht ist.

Durch den Zusatz eines Weichmachers wurden Effekte erreicht, die keineswegs voraussehbar waren. So wird durch die eine reversible Gelierung bewirkende Eigenschaft des oder der Weichmacher die Brüchigkeit der Stärkeacetate herabgesetzt, ohne jedoch deren Festigkeit nachhaltig zu beeinflussen bzw. zu erniedrigen, wie dies üblicherweise der Fall ist. So sind bisher auch nur die genannten Stoffe als Weichmacher ermittelt worden. Als Weichmacher Kommen in Frage stärkeacetatlösende Flüssigkeiten mit vorzugsweise niedrigem Dampfdruck, die über die nötige Gelierfähigkeit verfügen bzw. eine geringe festigkeitsmindernde Wirkung haben sowie vorzugsweise über eine zu brillanter Transparenz führende Lösungseigenschaft verfügen und dabei nachweislich vollständig biologisch abbaubar sind.

Zur oben erwähnten reversiblen Gelierung sei folgendes ausgeführt. Die erfindungsgemößen Weichmacher ergeben in Kombination mit den festen Stärkeacetaten bei mechanischer Durchmischung (Kneten, Schütteln, Rühren) bei steigender Zugabe zunächst eine starke Quellung der festen Stärkeacetate, dann äußerst zähe, klebrige Massen und zuletzt transparente viskose Quasi-Lösungen, die beim Stehenlassen Gele bilden. Durch erneute mechanische und wahlweise zusätzliche Erwärmung gehen diese Gele wieder in quasihomogene Lösungen über. Dies gilt sowohl für Mischungen von Stärkeacetat plus Weichmacher(n) als auch beim Zusatz von geeigtenen leichtflüchtigen Lösemitteln zur Gießfolienherstellung. Es wurde gefunden, daß die zeitliche Stabilität der Lösungen für die angestrebten Verarbeitungen ausreicht. So lassen sich z.B. selbst solche Lösungen bei Raumtemperatur homogen in Filmen ausziehen, die beim Stehenlassen bei Raumtemperatur nicht mehr gießfähige und homogen ausziebare Gele bilden würden. Die ausgezogenen Lösungsfilme trocknen zu brillant transparenten Folien ab, wobei die Gelbildung mitentscheidend für die Brillanz der Folien ist.

Der geforderte niedrige Dampfdruck wird selbstverständlich nicht durch den Dampfdruck der Einzelkomponenten erzielt, sondern entspricht dem effektiven Dampfdruck der Mischung.

Darüberhinaus wurde gefunden, daß z.B. anhand der Ethylester der Zitronensäure, der Milchsäure und den Acetaten des Glyzerins sowie Phosphorsäureester als Weichmacher insgesamt vollständig abbaubare Werkstoffmassen erzeugt werden können, die auf in der Kunststoffverarbeitung üblichen Maschinen wie Extrudern, Kalandern und Spritzgießmaschinen zu klaren Formteilen verarbeitet werden konnten.

Eine Prüfung auf biologische Abbaubarkeit in Kcmposterde sowohl von dem Derivat selbst als auch von den hergestellten Folien und Formteilen zeigte einen raschen Angriff und Zerfall des Materials, so daß von der Kompostierfähigkeit ausgegangen werden kann. Dabei erwiesen sich die zur Verarbeitung zugesetzten Weichmacher von entscheidender Bedeutung zur Schaffung von Angriffskomponenten und den Zerfall fördernden Bedingungen, die das Abbauverhalten bestimmen.

Ebenso ist es möglich, aus organischen Lösungsmitteln wie beispielsweise Essigsäureethylester klare, transparente und überaus flexible, vollständig biologisch abbaubare Folien zu erzeugen. Vorzugsweise setzt man bezogen auf die Summe von Weichmacher und Stärkeacetat 5 bis 20%ige Lösungen ein, wobei das Verhältnis Weichmacher zu Stärkeacetat vorzugsweise im Bereich 0,5 bis 50 % liegt. Die Abmischungen ohne zusätzliche Lösungsmittel lassen sich überraschenderweise erfolgreich zu brillant transparenten Folien kalandrieren, wobei erstaunlicherweise Temperaturen weit unter den Extrusionstemperaturen ausreichen. Kalandrieren und Extrudieren und damit auch Spritzgießverarbeitung sind also mit Weichmacher und Stärkeacetat allein möglich.

Erfindungsgemäß werden durch geringfügige Zugaben von längerkettigen Fettsäuren, wie z.B. Palmitinsäure oder Stearinsäure in Form von den freien Säuren und oder als Fettsäurechloriden während der Acetatisierung mit der Stärkefettacylverbindung wie dem Essigsäureanhydrid oder durch Verwendung der entsprechenden gemischten Anhydride neuartige Stärkewerkstoffe und Produkte mit anderen Eigenschaften erhalten. Beispielsweise sind aus diesen Derivaten Folien und Formteile erzeugbar, die im Vergleich zu denjenigen aus den reinen High-Amylose-Mais- und -Erbsenstärke- Acetaten noch deutlich flexibler, formstabiler, geschmeidiger und reißfester sind.

Neben dem Vorteil der weiteren Verbesserung des Stärkeacetat/ Weichmacher-Werkstoffs durch die Einbringung der längerkettigen Fettsäuren, insbesondere der natürlichen Fettsäuren (C12-C22 oder deren Derivaten) besteht der verfahrenstechnische Vorteil, daß hierdurch die einfache Herstellung des Werkstoffs keineswegs aufwendiger wird, da, obwohl man zunächst annehmen mußte, daß die Einbringung der Fettsäuren in das Reaktionsprodukt nicht ohne weiteres möglich wäre, eine Ein-Topf-Reaktion auch bei dieser besonders vorteilhaften Modifizierung des Werkstoffs möglich ist (Anspruch 7).

Durch Lösungsfraktionierung der Stärkeacylverbindungen sind ferner Massen mit unterschiedlichen Eigenschaften gezielt erzeugbar, die sich z.B. thermoplastisch zu Folien und Formteilen verarbeiten lassen.

Neben den genannten Stärken, insbesondere mit einem Amylosegehalt von über 70 %, sind auch deren Derivate wie z.B. Hydroxypropyl- und Hydroxyethylstärken mit niedrigem DS-Wert von 0,1 bis 0,2 für den erfindungsgemäßen Werkstoff als Rohstoff zur Acetatisierung einsetzbar.

Die im folgenden angegebenen Beispiele zeigen sowohl, wie einfach die erfindungsgemäßen Werkstoffe herstellbar sind, als auch ihre vorzügliche Eignung als Ausgangsmaterial für Gießfolien und thermoplastische Formteile mit uneingeschränkter biologischer Abbaubarkeit. Lösungsmittel, die vorzugsweise für die Gießfolienherstellung verwendet werden, sind im Anspruch 10 angegeben.

### Beispiel 1

### Herstellung von High-Amylose-Maisacetat

460g Hylon VII werden in 10-Liter-Vierhalskolben mit Rückflußkühler, Tropftrichter und Thermometer vorgelegt und unter Rühren mit 1500 ml Acetanhydrid versetzt. Nach etwa 5 Minuten Durchmischung werden 88g 50%ige NaOH zugetropft. Anschließend wird aufgeheizt, bis sich ein konstanter Rückfluß einstellt. Die Siedetemperatur beträgt etwa 125 °C. Dabei ist eine Überhitzung, die zum Festbrennen der Stärke am Kolbenrand führen kann, zu vermeiden.

Nach 1 bis 2 Stunden steigt die Viskosität an, bis nach bis 4 Stunden eine zähe, bräunlich klare Masse entsteht. Nach etwa 5 Stunden, der benötigten Reaktionszeit, werden 50 bis 100ml Essigsäure bei 118 °C abdestilliert und anschließend 200ml Ethanol zugetropft. Bei leicht gedrosselter Heizung wird noch 30 Minuten gerührt und anschließend werden etwa 100ml des entstandenen Lösungsmittelgemischs aus bei der Reaktion von Ethanol mit Acetanhydrid entstehendem Essigester und Essigsäure bei 102 bis 105 °C abdestilliert. Dann wird die Heizung weggenommen und man läßt die Masse 0,5 bis 1 Stunde abkühlen. Anschließend werden wieder 200 ml Ethanol zugetropft. Danach wird langsam mit etwa 21 Methanol gefällt. Das Produkt wird mehrmals mit Alkohol gewaschen, abgesaugt und an der Luft getrocknet. Zur Weiterverarbeitung wird das Produkt fein gemahlen und gesiebt.

Die Ausbeute lag wiederholt bei 670 bis 680g. Der bestimmte DS-Wert lag zwischen um 2,7 (2,5 - 2,9). Durch Zusatz von Weichmachern der genannten Art vor oder während der Weiterverarbeitung lassen sich die gewünschten Werkstoffe für Gießfolien und thermoplastische Formteile zur Verfügung stellen.

Durch die Abdestillation des Lösungsmittelgemischs vor der Fällung mit Alkohol läßt sich das Verfahren, bei dem ohnehin schon für Laborversuche relativ große Mengen eingesetzt wurden, ohne weiteres auf normale Produktionsmengen im Kilogrammbereich übertragen.

### Beispiel 2

### Herstellung von Erbsenstärkeacetat

Wie in Beispiel 1 werden 150g Erbsenstärke in 600g Acetanhydrid suspendiert und langsam 33g 50%ige Natronlauge zugetropft. Die Reaktionszeit bis zu einem für den Werkstoff gut brauchbaren Stärkeacetat mit einem DS-Wert von 1,86 beträgt nur 0,5 Stunden. Nach 2 Stunden ergibt sich ein gut brauchbares Stärkeacetat mit einem DS-Wert von 2,61.

Z.B. ist eine mit 30%igem Zitronensäureethylester (Citroflex 2) als Weichmacher gewonnen Gießfolie transparent und geschmeidig.

### Beispiel 3

### Stärkeacetatwerkstoff auf der Basis von Hylon VII mit Palmitinsäurechlorid und Glycerinacetat

23g Hylon VII werden in einem Vierhalskolben vorgelegt und unter Rühren mit 80g Essigsäureanhydrid versetzt. Anschließend werden 4,4g 50%ige NaOH-Lösung zugetropft. Nach einer Reaktionszeit von 2 Stunden werden 3,44g Palmitinsäurechlorid langsam zugetropft und es wird weitere 3 Stunden gerührt. Die Isolierung erfolgt wie in Beispiel 1 beschreiben. Der ermittelte DS-Wert beträgt um 2,5.

7g dieses Stärkeacetats wurden mit 3g Glycerinacetat verrührt und bei 180 °C 2 Minuten ohne Druck und 2 Minuten mit Druck (5 Tonnen) zu einer klaren, elastischen Folie gepreßt. Diese war tiefziehfähig.

### Beispiel 4

### Stärkeacetatwerkstoff auf der Basis von Hylon VII mit Palmitinsäure und Glycerinacetat

23g Hylon VII werden in einem Vierhalskolben vorgelegt und unter Rühren mit 80g Essigsäureanhydrid und 8g Palmitinsäure versetzt. Nach einer Reaktionszeit von 5 Stunden wird das Produkt, wie in Beispiel 1 beschrieben, isoliert. Der DS-Wert beträgt um 2,5. 7g dieses Stärkeacetats wurden mit 3g Glycerinacetat verrührt und bei 180 °C 2 Minuten ohne Druck und 2 Minuten mit Druck (5 Tonnen) zu einer klaren, elastischen Folie gepreßt. Diese war tiefziehfähig.

Die Beispiele 3 und 4 zeigen einerseits, daß der Ersatz von Teilen des Acetats durch die Fettsäure nicht auf bestimmte Teilmengen beschränkt ist. Andererseits wird deutlich, daß bei der jeweiligen Ein-Topf-Reaktion die Fettsäurekomponente sowohl von Anfang an als auch später eingesetzt werden kann.

Statt Palmitinsäure bzw. deren Chlorid sind zahlreiche andere längerkettige Fettsäuren wie C₆-C₂₄, gesättigt, einfach ungesättigt und mehrfach ungesättigt, wie sie in natürlichen Ölen und Fetten vorkommen, verwendbar.

### Beispiel 5

Herstellung einer Gießfolie In einem 250ml Zweihalskolben mit Rückflußkühler werden 80g Lösungsmittelgemisch aus 80 Vol% Aceton und 20 Vol% Milchsäureethylester vorgelegt. Hierzu werden 6g Zitronensäureethylester oder 6g Glycerinacetat gegeben und es wird gut verrührt. Anschließend werden 14g Stärkeacetat, z.B. gemäß der vorhergehenden Beispiele erzeugt, zugewogen und unter starkem Rühren auf etwa 80 °C erwärmt. Nach vollständiger Lösung nach 15 Minuten bis zu etwa 1 Stunde kann durch Druckfiltration gereinigt werden. Anschließend wird auf eine Glasplatte mit etwa 700 µm aufgerakelt. Die getrocknete Folie hat eine Dicke von ca. 50µm und wird nach dem Trocknen noch etwa 2 Stunden zur Homogenisierung frei aufgehängt.

Anstelle des Lösungsmittelgemischs kann auch Essigester verwendet werden, im Labor auch Chloroform. Auf diese Weise gewonnene Folien haben eine noch bessere Brillanz. Zusätze von Triphenylphosphat, Triallylphosphat, Trikresylphosphat, Acetessigester und Acetylaceton wirken sich positiv auf die Materialeigenschaften der resultierenden Folien aus.

Bei Verwendung eines Lösungsmittelgemischs aus 70 Vol% Aceton, 20 Vol% Milchsäureethylester und 10 Vol% Butylacetat gewinnt man Folien einer lederartigen Oberflächenstruktur.

### Beispiel 6

### Herstellung einer Preßfolie

7g Stärkeacetat werden intensiv mit 3g Zitronensäureethylester verrührt und auf der Thermopresse zwischen zwei Teflonscheiben zunächst 2 Minuten ohne Druck und anschließend 2 Minuten mit 5 Tonnen Druck und bei 200 °C gepreßt. Die hergestellten Folien sind tiefziehfähig.

### Beispiel 7

### Verarbeitung des Werkstoffs in einem Extruder.

Der verträgliche Weichmacher, z.B. Zitronensäureethylester, wird nicht mit dem Stärkeacetat, z.B. gemäß den obigen Beispielen, vorgemischt, sondern direkt während der Verarbeitung in den Extruder dosiert. Die Temperatureinstellung am Extruder war wie folgt: Zone I kalt, Zone II und III 150°C, Zone VI und V 100 °C und Zone VI 150 °C. Die Massentemperatur betrug 149 °C, der Druck lag bei einer Drehzahl von 151 upm bei 1×10⁶ Pa (10 Bar). Der Düsendurchmesser betrug 3mm.

Das Material ließ sich gut verarbeiten. Eine Wasserbadkühlung des extrudierten Strangs war möglich. Das Schneiden zu Granulat verlief problemlos.

Änderungen des Verarbeitungsdrucks z.B. durch Düsendurchmesservariation zeigten, daß die Maschineneinstellungen in weiten Grenzen variabel sind, so daß es dem Fachmann möglich ist, für die spezielle Werkstoffzusammensetzung aus Stärkeacetat und Weichmacher und abhängig von den jeweils eingesetzten Mengen die optimalen Betriebsparameter zu ermitteln.

Die angeführten Beispiele geben nur einen Bruchteil der insgesamt möglichen Einsatzstoffe und deren Mengenverhältnisse wieder. So wurde z.B. als Katalysator stets NaOH verwendet. Es ist jedoch davon auszugehen, daß auch eine andere alkalische Lösung möglich ist. Der DS-Wert hängt von der Reaktionszeit und auch der Lösungsfraktionierung ab. Obwohl dies nicht für den Werkstoff nötig ist, kann er bei der Erbsenstärke, falls dies für die herzustellenden Produkte (weniger Weichmacher) günstig ist, auch über 2,7 gesteigert werden. Jedoch zeigen bereits die wenigen Beispiele, daß eine vollständige Acetatisierung gerade nicht mehr nötig ist. So kann insbesondere der zeitliche Aufwand zur Herstellung der Stärkeacetatkomponente des Werkstoffs vorteilhaft verkürzt und vereinfacht werden. Im übrigen wird der DS-Wert auch durch den Ersatz von Teilen der Fettacylkomponente durch längerkettige Fettsäuren beeinflußt. So ist es möglich, den DS-Wert weiter zu erniedrigen ohne die Qualität des Produktes zu reduzieren.

Weitere Beispiele für das Kalandern des erfindungsgemäßen Werkstoffs sind im folgenden aufgeführt.

### Beispiel 8

35 g Stärkeacetat
15 g Zitronensäuretriethylester
werden gut gemischt und auf einem auf 105°C eingestellten Walzwerk oder Kalander zu Folien verarbeitet.

### Beispiel 9

35 g Stärkeacetat
15 g Glycerintriacetat
werden gut gemischt und auf dem Walzwerk (100°C) oder Kalander zu Folien verarbeitet.

### Beispiel 10

35 g Stärkeacetat
15 g Glycerintriacetat
1,5 g Adipinsäuredimethylester
werden gut gemischt und auf dem Walzwerk (105°C) oder Kalander zu Folien verarbeitet.

### Beispiel 11

35 g Stärkeacetat
10 g Glycerintriacetat
5 g Benzylbutylphthalat
werden gut gemischt und auf dem Walzwerk (140°C) oder Kalander zu Folien verarbeitet.

Bei dem genannten Stärkeacetat handelt es sich um eine High-Amylose-Maisstärke mit dem Handelsnamen Hylon VII. Diese Stärke wird, wie oben beschrieben, zu dem entsprechenden Acetat derivatisiert.

Die in den Beispielen angegebenen Weichmacher können in unterschiedlicher Kombination miteinander gemischt werden, beispielsweise ist auch die Kombination Benzylbutylphthalat mit Zitronensäuretriethylester möglich, obwohl sie nicht ausdrücklich erwähnt ist. Ebenso können die Weichmachermengen variieren. So können bis etwa 50 % Weichmacher zu dem Stärkeacetat gemischt werden. Erst danach wird die Masse zu weich.

## Patentansprüche

1. Naßfester, thermoplastischer zu umweltsicheren thermoplastisch hergestellten Produkten und Gießfolien verarbeitbarer Stärkewerkstoff, dadurch gekennzeichnet, daß er aus
(a) mindestens einer in Wasser schwerlöslichen Stärkeacylverbindung mit einem Substitutionsgrad von mindestens 1,86, herstellbar durch die Reaktion von
(i) Hoch-Amylose-Stärke mit einem Amylosegehalt > 70% Amylose,
mit
(ii) einer oder mehreren Acylkomponenten ausgewählt aus der Gruppe Essigsäure, Essigsäureanhydrid und C₆-C₂₄ Fettsäuren in Form der freien Säure oder Fettsäurechlorid sowie gemischten Anhydriden davon,
(b) mindestens einem biologisch abbaubaren Weichmacher ausgewählt aus der Gruppe Zitronensäureethylester, Glycerinacetat, Phosphorsäureester und Milchsäureethylester,
und
(c) gegebenenfalls Adipinsäuredimethylester oder Benzylbutylphthalat
besteht.

2. Stärkewerkstoff nach Anspruch 1, dadurch gekennzeichnet, daß die Stärkeacylverbindung auf Maisstärke basiert und einen Substitutionsgrad um 2,5 aufweist.

3. Stärkewerkstoff nach Anspruch 1, dadurch gekennzeichnet, daß die Stärkeacylverbindung auf Erbsenstärke basiert und einen Substitutionsgrad bis zu 3,0 aufweist.

4. Stärkewerkstoff nach einem der Ansprüche 1 bis 3, dadurch gekennzeichnet, daß die Stärkeacylverbindung einen Substitutionsgrad ≥ 2,0 aufweist und die Acylkomponente Essigsäure ist.

5. Stärkewerkstoff nach einem der vorhergehenden Ansprüche, dadurch gekennzeichnet, daß die Acylkomponenten zumindest teilweise natürliche Fettsäuren C₁₂-C₂₂ oder deren Derivate sind.

6. Stärkewerkstoff nach einem der vorhergehenden Ansprüche, dadurch gekennzeichnet, daß der Anteil des Weichmachers etwa 0,5 % bis 50 % bezogen auf die Masse der Stärkeacylverbindung beträgt.

7. Verfahren zur Herstellung von Stärkewerkstoff nach einem der vorhergehenden Ansprüche, dadurch gekennzeichnet, daß die Acylkomponenten in einer Ein-Topf-Reaktion gleichzeitig oder nacheinander ohne Isolierung der Zwischenprodukte mit der Stärke zur Reaktion gebracht werden.

8. Verfahren nach Anspruch 7, dadurch gekennzeichnet, daß anschließend die Stärkeacylverbindung durch Lösungsfraktionierung aus dem Reaktionsprodukt gewonnen wird.

9. Verfahren zur Herstellung von thermoplastischen Folien und Formteilen durch Extrusion oder Spritzgruß in bekannter Weise aus dem Stärkewerkstoff nach einem der Ansprüche 1 bis 6, wobei der oder die Weichmacher der Stärkeacylverbindung erst bei der Einspeisung des Werkstoffes in die Verarbeitungsrichtung zugesetzt werden.

10. Verfahren zur Herstellung von Gießfolien in bekannter Weise aus Stärkewerkstoff nach einem der Ansprüche 1 bis 6, dadurch gekennzeichnet, daß als Lösungsmittel bei der Gießfolienherstellung Essigsäureethylester, Milchsäureethylester, Essigsäure-n-Butylester, Chloroform, Methylenchlorid, Aceton, Acetessigester, Acetylaceton und deren Mischungen eingesetzt werden.

11. Verwendung von Stärkewerkstoff nach einem der Ansprüche 1 bis 6 zur Herstellung von thermoplastischen Folien und Formteilen durch Extrusion, Spritzguß und Kalandrieren.

12. Verwendung von Stärkewerkstoff nach einem der Ansprüche 1 bis 6 zur Herstellung von Gießfolien.

## Claims

1. Wetfast, thermoplastic starch material, which can be processed to environmentally safe, thermoplastically produced products and cast films, characterized in that it comprises
(a) at least one starch acyl compound difficultly soluble in water with a degree of substitution of at least 1.86, which can be produced by the reaction of
(i) high amylose starch with an amylose content > 70% amylose with
(ii) one or more acyl components chosen from the group acetic acid, acetic anhydride and C₆-C₂₄ fatty acids in the form of free acid or fatty acid chloride, as well as mixed anhydrides thereof,
(b) at least one biodegradable plasticizer chosen from the group ethyl citrate, glycerin acetate, phosphate and ethyl lactate and
(c) optionally dimethyl adipate or benzyl butyl phthalate.

2. Starch material according to claim 1, characterized in that the starch acyl compound is based on maize starch and has a degree of substitution of about 2.5.

3. Starch material according to claim 1, characterized in that the starch acyl compound is based on pea starch and has a degree of substitution up to 3.0.

4. Starch material according to one of the claims 1 to 3, characterized in that the starch acyl compound has a degree of substitution ≥ 2.0 and the acyl component is acetic acid.

5. Starch material according to one of the preceding claims, characterized in that the acyl components are at least partly natural fatty acids C₁₂-C₂₂ or their derivatives.

6. Starch material according to one of the preceding claims, characterized in that the proportion of plasticizer is approximately 0.5 to 50%, based on the starch acyl compound mass.

7. Process for the production of starch material according to one of the preceding claims, characterized in that the acyl components are simultaneously or successively reacted with the starch, without separation of the intermediates, in a batch reaction.

8. Process according to claim 7, characterized in that subsquently the starch acyl compound is obtained by solution fractionation from the reaction product.

9. Process for the production of thermoplastic films and mouldings by extrusion or injection moulding in known manner from the starch material according to one of the claims 1 to 6, the plasticizer or plasticizers being added to the starch acyl compound only on feeding the material in the processing direction.

10. Process for the production of cast films in known manner from starch material according to one of the claims 1 to 6, characterized in that as solvents in cast film production use is made of ethyl acetate, ethyl lactate, n-butyl acetate, chloroform, methylene chloride, acetone, acetoacetic ester, acetyl acetone and mixtures thereof.

11. Use of the starch material according to one of the claims 1 to 6 for producing thermoplastic films and mouldings by extrusion, injection moulding and calendering.

12. Use of the starch material according to one of the claims 1 to 6 for producing cast films.

## Revendications

1. Matériau à base d'amidon, thermoplastique, résistant à l'humidité, pouvant être transformé en produits et feuilles coulées fabriqués de façon thermoplastique et sûrs pour l'environnement, caractérisé en ce qu'il est formé de :
(a) au moins un composé acylé d'amidon peu soluble dans l'eau, ayant un taux de substitution d'au moins 1,86, qu'on peut préparer par réaction de :
(i) un amidon à teneur élevée en amylose, ayant une teneur en amylose > 70 % d'amylose,
avec
(ii) un ou plusieurs composants acyles choisis dans l'ensemble constitué par l'acide acétique, l'anhydride acétique et les acides gras en C₆-C₂₄ sous la forme de l'acide libre ou du chlorure d'acide, ainsi que des anhydrides mixtes de ceux-ci,
(b) au moins un plastifiant biodégradable choisi dans l'ensemble constitué par le citrate d'éthyle, l'acétate de glycérol, les esters phosphoriques et le lactate d'éthyle, et
(c) éventuellement de l'adipate de diméthyle ou du phtalate de benzylbutyle.

2. Matériau à base d'amidon selon la revendication 1, caractérisé en ce que le composé acylé d'amidon est à base d'amidon de maïs et a un taux de substitution d'environ 2,5.

3. Matériau à base d'amidon selon la revendication 1, caractérisé en ce que le composé acylé d'amidon est à base d'amidon de pois et a un taux de substitution allant jusqu'à 3,0.

4. Matériau à base d'amidon selon l'une des revendications 1 à 3, caractérisé en ce que le composé acylé d'amidon a un taux de substitution ≥ 2,0, et le composant acylé est l'acide acétique.

5. Matériau à base d'amidon selon l'une des revendications précédentes, caractérisé en ce que les composants acyles sont, au moins en partie, des acides gras naturels en C₁₂-C₂₂ ou des dérivés de ceux-ci.

6. Matériau à base d'amidon selon l'une des revendications précédentes, caractérisé en ce que la proportion de plastifiant est d'environ 0,5 % à 50 % par rapport à la masse du composé amidon acylé.

7. Procédé de fabrication d'un matériau à base d'amidon selon l'une des revendications précédentes, caractérisé en ce que les composants acyles sont mis en réaction avec l'amidon lors d'une réaction dans un seul récipient, simultanément ou successivement, sans isolement des produits intermédiaires.

8. Procédé selon la revendication 7, caractérisé en ce qu'on obtient ensuite le composé acylé d'amidon par fractionnement en solution du produit de réaction.

9. Procédé de fabrication de feuilles thermoplastiques et de feuilles coulées, par extrusion ou par coulée par injection d'une manière connue en soi, à partir du matériau à base de maïs selon l'une des revendications 1 à 6, dans lequel le ou les plastifiants sont ajoutés au composé acylé d'amidon seulement après l'introduction du matériau dans le dispositif de transformation.

10. Procédé de fabrication de feuilles coulées, d'une manière connue en soi, à partir d'un matériau à base d'amidon selon l'une des revendications 1 à 6, caractérisé en ce qu'on utilise, comme solvant, pour la fabrication des feuilles coulées, l'acétate d'éthyle, le lactate d'éthyle, l'acétate de n-butyle, le chloroforme, le chlorure de méthylène, l'acétone, un ester de l'acide acétoacétique, l'acétylacétone, ainsi que leurs mélanges.

11. Utilisation d'un matériau à base d'amidon selon l'une des revendications 1 à 6 pour la fabrication de feuilles thermoplastiques et de pièces moulées, par extrusion, par coulée par injection et par calandrage.

12. Utilisation d'un matériau à base d'amidon selon l'une des revendications 1 à 6 pour la fabrication de feuilles coulées.
